# EUROPEAN PATENT APPLICATION

(11) **EP 1 983 713 A1**
(43) Date of publication of application: **22.10.2008**
(21) Application number: 07007728.4
(22) Date of filing: 16.04.2007
(51) Int. Cl.: H04L 29/06, H04L 12/56

(54) **Method for operating a network element and according device as well as communication system comprising such device**

(71) Applicant: Nokia Siemens Networks Oy, 02610 Espoo (FI)
(72) Inventor: David, Shlomi Ben, 58339 Holon (IL); Hermoni, Roi, Tel Aviv (IL)
(74) Representative: Bruglachner, Thomas E.

(57) **Abstract**

A method for operating a network element and an according device are provided, wherein the network element is part of a first network and wherein the network element is connected directly or via at least one additional network element to a serving network element, said method comprising the step: due to a change in the first network, the network element sends a message of the serving network element to network elements of the first network.

## Description

The invention relates to a method for operating a network element and an according device as well as a communication system comprising such a device.

IPTV (Internet Protocol Television) is a system where a digital television service is delivered using the Internet Protocol over a network infrastructure, which may include delivery by a broadband connection.

For residential users, IPTV is often provided in conjunction with Video on Demand and may be bundled with Internet services such as Web access and VoIP.

IPTV is typically supplied by a broadband operator using a closed network infrastructure. This closed network approach is in competition with the delivery of TV content over the public Internet. This type of delivery is widely called TV over Internet or Internet Television.

In businesses, IPTV may be used to deliver television content over corporate LANs and business networks. Another definition of IPTV may be related to television content that, instead of being delivered through traditional formats and cabling, is received by the viewer through the technologies used for computer networks.

The Internet Group Management Protocol (IGMP) is a communications protocol used to manage the membership of Internet Protocol multicast groups. Preferably, IGMP is used by IP hosts and adjacent multicast routers to establish multicast group memberships. IGMP may be used for online video and gaming, and allows an efficient use of resources regarding these applications.

With regard to IPTV the following service characteristics are of importance:
- low delay;
- low jitter;
- very low packet loss.

These service characteristics require a stable as well as a resilient network.

There are several approaches that distribute Multicast traffic:

### a) IP Multicast Distribution

This method involves layer 3 routing protocols such as OSPF (Open Shortest Path First) or IS-IS with a IP Multicast routing protocol like PIM (Protocol Independent Multicast) thereupon.

The overall resiliency performance is problematic. After any topology change, both protocols must reconvene before the service will be active again. In most cases, the convergence time is about three seconds, which is too long for a service provider and hence not acceptable.

### b) Flood Multicast Distribution

This approach requires a considerable amount of bandwidth and thus is not very popular when it comes to modern IPTV services.

Regarding resiliency, the performance is not sufficient, because the approach depends on layer 2 convergence and an IGMP topology awareness.

### c) MPLS Multicast Distribution

With regard to MPLS Multicast Distribution, there exist two main options, Multicast over VPLS (Virtual Private LAN Service) and Multicast over point-to-multipoint RSVP-TE (Resource Reservation Setup Protocol - Traffic Engineering) tunnels. These options do not provide resiliency mechanisms as needed.

The **object** to be solved is to overcome the disadvantages as stated before and to provide an approach that allows a low recovery time after a change in topology of a network.

This problem is solved according to the features of the independent claims. Further embodiments result from the depending claims.

In order to overcome this problem a method is provided for operating a network element, wherein the network element is part of a first network and wherein the network element is connected directly or via at least one additional network element to a serving network element, said method comprising the step:
- due to a change in the first network, the network element sends a message of the serving network element to network elements of the first network.

As the network element becomes aware of a change in the first network, the network element can react and act on behalf of the serving network element thereby sending a message of the serving network element to participants of the first network. Advantageously, this enables those participants of the first network to adjust themselves according to the change in the first network and be further operative to receiving information from the serving network element.

An embodiment is that the message of the serving network element leads to or results in a port change of at least one network element of the first network.

This allows the at least one network element of the first network to receive information provided by the serving network element by an alternative port that is set according to the message initiated by the network element of the first network.

It is another embodiment that the serving network element comprises at least one of the following entities:
- a multimedia server;
- a multimedia router;
- an IGMP server;
- an IGMP router.

Preferably, each such entity is equipped such that it may provide downstream data, e.g., video, radio, (user) data or the like.

In yet another embodiment, the change in the first network is initiated by a failure of a link within the first network.

It is a further embodiment that a ring protection protocol, in particular a Ethernet Ring Protection (ERP) protocol, is run within the first network.

Preferably, the first network may comprise a ring topology. A failure of a link in the ring thus may lead to unblocking a secondary port at a redundancy manager, which is a managing node within the first network. This allows that all network elements of the ring topology can be reached via a primary port and the secondary port (both active) of the redundancy manager.

As an alternative embodiment, the change in the first network is conveyed (throughout the first network) via a control VLAN.

Furthermore, the network element may be a network element of the first network (located) next to the serving network element. In particular, the network element can be chosen to be the nearest network element to the serving network element.

It is also an embodiment that the network element is connected via (at least) a second network to the serving network element. This second network may also comprise a ring topology that may further - at least partially - be independent from the topology of the first network.

In yet a further embodiment, the message of the serving network element is a general query message.

A particular embodiment is that the message of the serving network element is forwarded towards subscribers.

Such subscribers may be users and/or customers or a streaming video/audio and/or data service distributed by a provider.

In another embodiment, each network element may be of the following type:
- a switch;
- a router;
- a gateway.

As an alternative embodiment, the method provided herein may be used for streaming services, in particular for IPTV services.

The problem is also solved by a device comprising a processor unit that is arranged and/or equipped such that the method as described herein can be run or executed on said device.

The device may in particular be a communication device, e.g. a network element or component.

As an embodiment, the device may be of the following type:
- a switch;
- a router;
- a gateway.

Further, the problem is solved by a communication system comprising at least one device as described in this approach.

Embodiments of the invention are shown and illustrated in the following figures:
- Fig.1: shows a diagram comprising network elements and a redundancy manager performing an ERP protocol in normal operation;
- Fig.2: shows the diagram of Fig.1 with a link failure between two network elements;
- Fig.3: shows the diagram of Fig.2 with the redundancy manager opening the secondary port to allow operation of the ring;
- Fig.4: shows a diagram with a ring topology and an IGMP Router attached to the ring thereby providing an example of ERP and IGMP interaction;
- Fig.5: shows a diagram of two rings and an IGMP Router attached to the first ring, wherein the rings are stacked to one another;

Next is a brief description of an Ethernet Ring Protection (ERP) protocol and an Internet Group Management Protocol (IGMP) protocol.

### ERP - Ethernet Ring Protection

ERP refers to a ring technology preferably used in the field of Ethernet. The ERP protocol ensures that a ring comprising several network elements does not contain any loop. This is achieved by the ERP protocol disabling one segment of the ring, preferably by deactivating a particular port of a certain network element.

In an ERP ring one particular node is selected to be a Redundancy Manager (RM), the remaining nodes are equal.

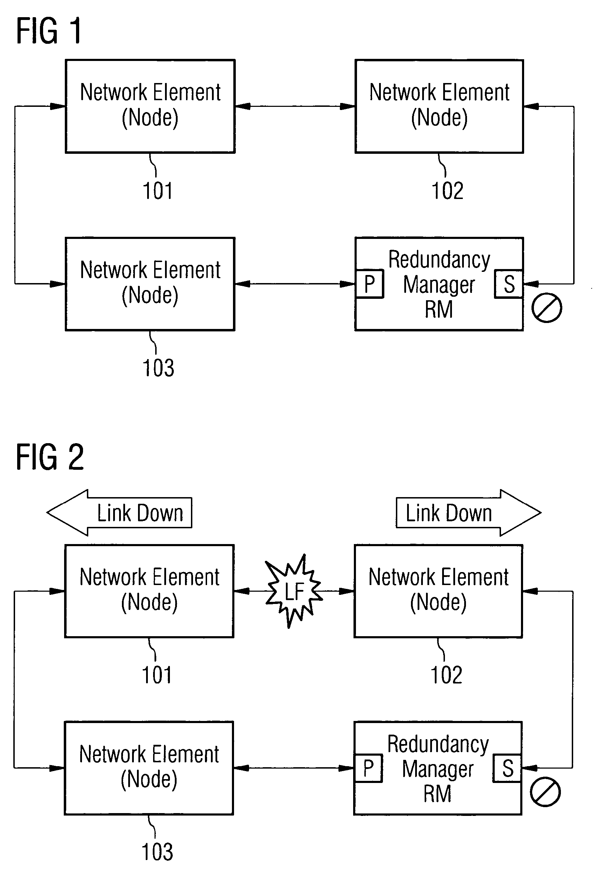

**Fig.1** shows the ERP protocol in normal operation. Network Elements 101, 102, 103 and a Redundancy Manager RM are grouped together in a ring network topology.

In particular during normal operation, the Redundancy Manager RM assures that the loop is open. The Redundancy Manager RM has a primary port P and a secondary port S. In normal operation, the secondary port S is blocked, no user traffic is transmitted via this secondary port S.

The Redundancy Manager RM sends test messages over the ring. These test messages are also received at the Redundancy Manager RM thereby allowing to check the integrity of the ring.

According to **Fig.2**, a link failure LF occurs on the link between the Network Element 101 and the Network Element 102. The Redundancy Manager RM is informed about the link failure LF by Link Down messages sent by the Network Element 101 and by the Network Element 102. Alternatively, the Redundancy Manager RM may recognize the link failure LF pursuant to test packets that are no longer circulating through the ring.

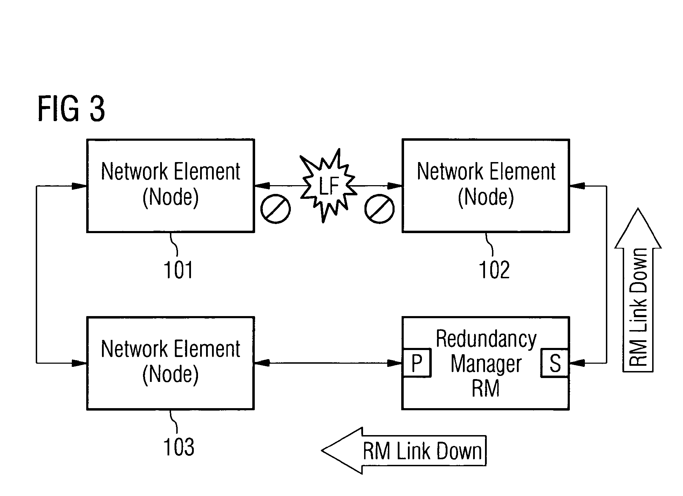

In either case, due to the link failure LF the Redundancy Manager RM unblocks its secondary port S in order to provide an alternative path for user traffic to the Network Element 102 (see **Fig.3**).

A control VLAN is used to convey protocol information between the nodes participating at the ERP protocol.

The ERP mechanism extends the common VLAN concept, adding an additional level of ingress and egress VLAN filtering rules on the ERP ring ports for VLANs belonging to the ERP domain.

ERP further removes entries from the forwarding data base (FDB) as well as temporarily disables a learning process in order to guarantee correct FDBs at the nodes of the ring.

### IGMP (Internet Group Membership Protocol)

The Internet Group management protocol (IGMP) is used by IP hosts to report their host group memberships to any adjacent multicast router. IGMP messages are encapsulated in IP datagrams, with an IP protocol number of IGMP, e.g., according to the versions of IGMP, i.e., IGMP v1, v2 or v3.

### Interaction between ERP and IGMP

The approach presented herewith deals with an interaction of two protocols and allows improved interworking thereby providing a higher resiliency of the overall system.

IGMP is used within a broadband network as, e.g., a mechanism changing channels (zapping) provided by an IPTV service.

The application of IPTV is sensitive and critical as any operator of such service needs to ensure continuous availability and hence tries to avoid any kind of interruption due to network failures that might be perceived by a customer or subscriber of such service.

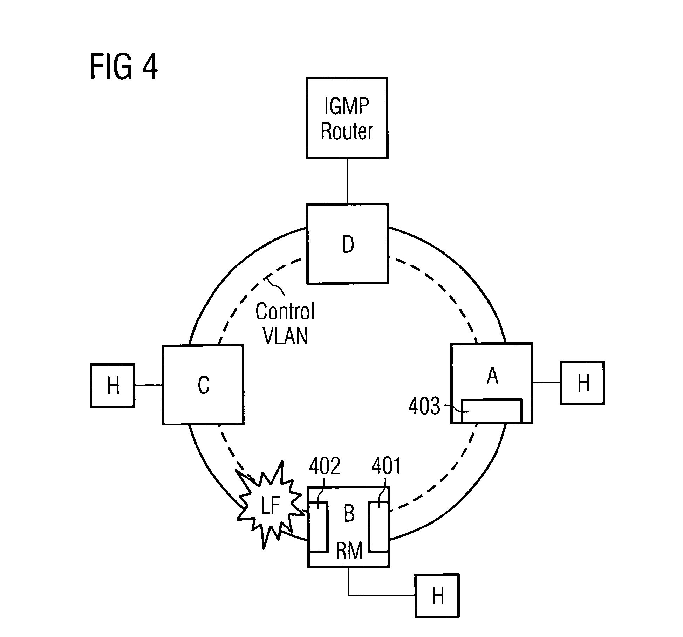

**Fig.4** shows an example of a ERP-IGMP interaction. A ring comprises network elements or nodes A, B, C and D, to each of the nodes A, B and C a subscriber (or customer) H is attached. Each of the nodes A, B, C and D has two ports. Furthermore, a control VLAN is shown as a dashed line indicating that control messages can be sent through the ring network.

During normal operation, the node B - acting as Redundancy Manager RM - blocks its secondary port 401. A primary port 402 of node B is active thereby defining the ring network as follows:
B <-> C <-> D <-> A.

After a link failure LF at the link between node B and node C, node B activates its secondary port 401 thereby defining a new ring topology:
B <-> A <-> D <-> C.

According to this topology change, the subscriber H of node B can no longer be reached by the IGMP services as the port associated to the IGMP router at node A did not point to node B during normal operation (node B then was reached via node C only).

Hence, due to the link failure LF between nodes B and C, the port associated to IGMP traffic at node A has to be switched to port 403 thereby allowing IGMP router information to be transferred to node B via node A.

However, such router port at a node is changed due to a so-called general query-message that is usually sent by the IGMP router each, e.g., 125 seconds. In most networks, operators deliberately maintain such a long general query interval in order to reduce an overall amount of IGMP queries sent throughout the network.

If such long general query interval has to pass before a port of a node within the ring could be updated, this will likely lead to service interruptions perceivable by subscribers H of the services associated with IGMP.

Such interruption, however, is unacceptable in an, e.g., video streaming application like IPTV.

As the IGMP Router does not know anything about an adjacent or far-off network topology, this IGMP Router is not at all aware of any link failure LF within a ring topology as shown in Fig.4, in particular because its layer 3 does not run a layer 2 protocol of handling ring disturbances.

In this approach, after the ring topology changed, node D that is connected to the IGMP Router sends the General Query on behalf of the IGMP Router.

The General Query will be send to both interfaces of node D and the rest of the nodes of the ring network will forward the General Query towards the associated subscribers H.

The last subscriber will respond with the IGMP Join Message indicating a multicast group or channel it wants to watch.

This time, the network element (e.g., node A) obtains a marked IGMP router port as a result of the General Query sent by Node D.

After the general query interval expires again, the IGMP Router will send another IGMP General Query and the network is back to its routine.

The Node sending the General Query message after a topology change is also referred to as "Snooping Querier". In the embodiment according to Fig.4, node D is configured as the IGMP Snooping Querier.

An advantage of this approach is that the IGMP Snooping Querier significantly improves network resiliency in cases of topology changes.

This allows tremendously improved recovery time of the network in case of, e.g., link failure LF. This is essential to the acceptance of a customer subscribing to an IPTV service.

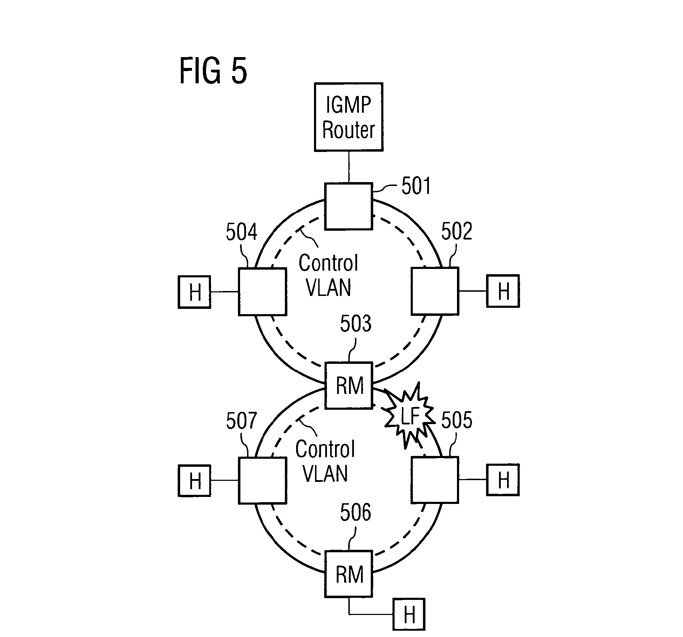

**Fig.5** shows another example with stacked ring networks. A first ring comprises nodes 501, 502, 503 and 504, wherein node 503 is a Redundancy Manager RM of this first ring. A second ring comprises nodes 503, 505, 506 and 507, wherein node 506 is a Redundancy Manager RM of this second ring. Subscribers H are attached to nodes 502, 504, 505, 506 and 507.

In the example according to Fig.5 a link failure LF occurs in the second ring on the link between node 503 and node 505. Node 501 acting a Snooping Querier as explained above is not aware of a link failure LF in the second ring, thus no General Query message is initiated by node 501. With regard to the second ring, node 503 is the node closest to the IGMP Router and will generate the General Query message to be sent via the second ring after the topology of the second ring has changed due to the link failure LF. Accordingly, the node 503 is pre-configured as Snooping Querier for the second ring.

## Claims

1. Method for operating a network element
- wherein the network element is part of a first network; and
- wherein the network element is connected directly or via at least one additional network element to a serving network element
comprising the step:
- due to a change in the first network, the network element sends a message of the serving network element to network elements of the first network.

2. The method of claim 1, wherein the message of the serving network element leads to a port change of at least one network element of the first network.

3. The method according to any of the preceding claims, wherein the serving network element comprises at least one of the following:
- a multimedia server;
- a multimedia router;
- an IGMP server;
- an IGMP router.

4. The method according to any of the preceding claims, wherein the first network changes due to a failure of a link within the first network.

5. The method according to claim 4, wherein a ring protection protocol is run within the first network.

6. The method according to claim 5, wherein the ring protection protocol is an Ethernet ring protection protocol.

7. The method according to any of the preceding claims, wherein the change in the first network is conveyed via a control VLAN.

8. The method according to any of the preceding claims, wherein the network element is a network element of the first network next to the serving network element.

9. The method according to any of the preceding claims, wherein the network element is connected via a second network to the serving network element.

10. The method according to any of the preceding claims, wherein the message of the serving network element is a general query.

11. The method according to any of the preceding claims, wherein the message of the serving network is forwarded towards subscribers.

12. The method according to any of the preceding claims, wherein each network element is of the following type:
- a switch;
- a router;
- a gateway.

13. The method according to any of the preceding claims used for streaming services, in particular for IPTV services.

14. A device comprising a processor unit that is arranged such that the method according of any of the preceding claims is executable on said processor.

15. The device according to claim 14, wherein said device is a communication device, in particular a network element.

16. The device according to any of claims 14 or 15, wherein the device is of the following type:
- a switch;
- a router;
- a gateway.

17. Communication system comprising the device according to any of claims 14 to 16.
